# EUROPÄISCHE PATENTSCHRIFT

(11) **EP 1 232 189 B1**
(45) Veröffentlichungstag und Bekanntmachung des Hinweises auf die Patenterteilung: **03.12.2003**
(21) Anmeldenummer: 99950380.8
(22) Anmeldetag: 19.10.1999
(51) Int. Cl.: C08F 2/24, C08F 251/00

(54) **EMULSIONSPOLYMERISATIONSVERFAHREN**
EMULSION POLYMERIZATION METHOD
PROCEDE DE POLYMERISATION EN EMULSION

(43) Veröffentlichungstag der Anmeldung: 21.08.2002
(73) Patentinhaber: SÜDZUCKER AKTIENGESELLSCHAFT MANNHEIM/OCHSENFURT, 68165 Mannheim (DE)
(72) Erfinder: PFALZ, Monika, A-1190 Wien (AT); WASTYN, Marnik, Michel,, A-2320 Schwechat (AT); GRÜLL, Dietmar, A-3442 Langenschönbichl (AT)
(74) Vertreter: Pawloy, Peter Michael, Dipl.-Ing.
(86) Internationale Anmeldenummer: AT9900249
(87) Internationale Veröffentlichungsnummer: WO01029091

(56) Entgegenhaltungen:
- DE-A- 19 650 790
- GB-A- 2 075 526
- US-A- 5 667 848

## Beschreibung

Die gegenständliche Erfindung betrifft Emulsions(co)polymerisationsverfahren, bei welchen Stärke in vorzugsweise modifizierter bzw. derivatisierter Form, gegebenenfalls gemeinsam mit anderen an sich bekannten Emulgatoren oder Hilfsmitteln, zur Stabilisierung der Emulsion verwendet wird, und betrifft wässerige Polymerdispersionen, in denen solche Stärken und gegebenenfalls an sich bekannte Emulgatoren oder Hilfsmittel enthalten sind.

Unter Emulsions(co)polymerisationsverfahren (die der Einfachheit halber hierin später als Emulsionspolymerisationsverfahren bezeichnet werden) versteht man ganz allgemein (Co)polymersationsverfahren, bei welchen flüssige Monomere in einer wässerigen Emulsion vorliegen und in dieser Form der Polymerisation unterworfen werden. Bei diesen Verfahren entstehen wässerige Polymerdispersionen, die entweder direkt einem Verwendungszweck zugeführt oder zur Gewinnung der Polymeren anschließend getrocknet werden. Die Monomeren sind in der Regel ethylenisch ungesättigte Verbindungen, die zu Homo- oder Copolymeren verarbeitet werden. Die Stärke wirkt hauptsächlich als Schutzkolloid, manchmal auch als Emulgator für die Monomeren und dient somit als Stabilisator für die Monomeremulsionen ebenso wie für die entstehenden Polymerdispersionen.

Der prinzipielle Vorteil der Verwendung von Stärke, modifizierter Stärke und Stärkederivaten in technischen Verfahren allgemein und insbesondere bei der Emulsionspolymerisation ist der, daß es sich bei Stärke um einen natürlichen und sich jährlich erneuernden Rohstoff handelt, der kostengünstig und im Überschuß vorhanden ist. Daher wird in der Technik die Stärke auch tatsächlich häufig für die verschiedensten Verwendungszwecke eingesetzt.

Andere bei der Emulsionspolymerisation gebräuchliche Schutzkolloide sind teilweise oder vollständig hydrolysierte Polyvinylalkohole, natürliche und synthetische Gummi sowie Celluloseether, wie Methylcellulose, Hydroxyethylcellulose, und Ethylhydroxyethylcellulose. Gegen die Verwendung von Polyvinylalkoholen und Celluloseethern spricht die Tatsache, daß diese Stoffe unter bestimmten Bedingungen zur Ausfällung neigen und dann ihre Funktion eines Schutzkolloids nicht mehr ausüben können. Bei Celluloseethern, Polyvinylalkoholen und diversen Gummis handelt es sich weiters um relativ teure Substanzen, was ihre Verwendung wiederum ungünstig macht.

Die Herstellung von Polymerdispersionen in Gegenwart von Stärke oder Stärkederivaten als Schutzkolloid ist relativ ausführlich dokumentiert:

Das US Patent 3,632,535 (R.E. Gramera, 1972) beschreibt die Verwendung oxidierter Stärken als Schutzkolloide bei der Herstellung von Vinylesterpolymeren, deren Verwendung zur Papierveredelung, Textilimprägnierung, als Klebstoff oder Schutzüberzug vorgeschlagen wird.

Das US Patent 3,769,248 (L.P. Kovats, 1973) beschreibt die Verwendung von carboxymethylierten Stärken und Hydroxyalkylstärken, besonders von Hydroxypropylstärke alleine und Mischungen von Hydroxypropyl- und Hydroxyethylstärke, als Stabilisatoren bei der radikalischen Polymerisation von Vinylacetat.

Die EP-A1 0 021 542 (P.F.T. Lambrechts, 1981) beschreibt ebenfalls die Herstellung wässeriger Vinylacetat(co)polymerdispersionen in Gegenwart von Hydroxypropyl- und/oder Hydroxyethylstärken als Schutzkolloid, wobei die Verwendung der Dispersionen als Klebstoff, als Überzug oder in der Farbenindustrie vorgeschlagen wird.

Die EP-A2 0 133 899 (H. Brabetz et al., 1985) beschreibt die Verwendung von cyanalkylierten, hydroxyalkylierten und/oder carboxymethylierten Stärken als Schutzkolloide bei der Polymerisation von Vinylestern.

Das US Patent 4,940,741 (D.R. De Wacker, 1990) beschreibt die Herstellung von Preßspanplatten, bei deren Herstellung eine in Gegenwart eines Stärkederivats polymerisierte Polyvinylacetatemulsion eingesetzt wird. Als pflanzliche Herkunft wird Mais, Tapioka und Wachsmais angegeben, die Stärken sind gegebenenfalls octenylsuccinyliert, hydroxypropyliert, sauer, enzymatisch oder oxidativ abgebaut.

Die beiden Anmeldungen der National Starch and Chemical Corporation EP-A 1 0 223 145 (C.P. Iovine et al., 1987) und EP-A2 0 245 718 (J.G. Palmer, 1987) erwähnen die Verwendung von hydrophobierten, im besonderen alkenylsuccinylierten Stärken, imidazolhältigen Stärken, kationisierten Stärken und sauer oder enzymatisch abgebauten Stärken als Schutzkolloide bei der Emulsionspolymerisation zur Herstellung von Vinylesterpolymeren, wobei als bevorzugte pflanzliche Herkunft der Stärken Wachsmais und Tapioka angeführt werden.

Ein weiteres Anwendungsgebiet der Emulsionspolymerisation in Gegenwart von Stärken, modifizierten Stärken oder Stärkederivaten besteht in der Herstellung von Polyacrylpolymeren und -copolymeren, wobei bevorzugt Dextrine und abgebaute Stärken eingesetzt werden. Chemisch nicht weiter modifizierte Stärkeabbauprodukte werden in einer Reihe von Anmeldungen der BASF AG (EP-A1 0 536 597, WO 94/08085, WO 97/17387, WO 98/24821) erwähnt, teilweise erfolgt ein enzymatischer Abbau auch erst unmittelbar vor der Polymerisation im selben Reaktionsgefäß (EP-A2 0 276 770, WO 95/13194, WO 98/24821).

Copolymerisationen von (Meth)acrylnitril, eines oder mehrerer Acrylsäureester und gegebenenfalls anderer ethylenisch ungesättigter copolymerisierbarer Monomerer in Gegenwart von oxidativ abgebauten oder kationisierten, abgebauten Kartoffelstärken, sowie der Einsatz von Hydroxyethylstärken im allgemeinen werden in EP-A1 0 257 412 (H. Degen et al., 1988) und EP-A2 0 276 770 (H. Degen et al., 1988) beschrieben. Erwähnt seien ebenfalls die Anmeldungen EP-A2 0 134 449 (H. Brabetz et al., 1985), EP-A2 0 134 451 (J. Schulze et al., 1985), DE-A1 39 22 784 (G. Rinck et al., 1991), EP-A 0 334 515 (R. Kniewske et al., 1989) und EP-A1 0 536 597 (K. Wendel et al., 1993), in denen die Herstellung wässeriger Polymerdispersionen durch radikalische, wässerige Emulsionspolymerisation ethylenisch ungesättigter Monomerer in Gegenwart von Stärken, modifizierten Stärken oder Stärkeabbauprodukten beschrieben wird. Jede Stärkeform hat ihre eigenen Merkmale, die sich von denen anderer Formen unterscheiden. Eine Schlußfolgerung von einer Form auf die andere ist keineswegs möglich oder gestattet.

Auch die EP-A 0 257 412 und 0 276 770 beschreiben die Emulsionspolymerisation von Monomerenmischungen, wobei in Gegenwart von abgebauter Stärke mit Viskositäten von 0,12 bis 0,50 dl/g bzw. von 0,04 bis weniger als 0,12 dl/g gearbeitet wird. Es werden dabei feinteilige wässerige Polymerdispersionen erhalten, die als Leimungsmittel für Papier dienen. Es wird erwähnt, daß als Stärke hiefür sämtliche nativen Stärken verwendet werden können, ohne daß jedoch Vorteile oder Nachteile bestimmter Stärken beobachtet worden wären.

Der vorliegenden Erfindung liegt nun die überraschende Erkenntnis zugrunde, daß nicht nur in speziellen Fällen, sondern ganz allgemein bei Emulsionspolymerisationen Amylopektin-Kartoffelstärke in nativer oder modifizierter bzw. derivatisierter Form als Schutzkolloid zur Stabilisierung der Emulsionen eine besonders gute Wirkung erzielt. Dabei ist es vom chemischen wie vom wirtschaftlichen Standpunkt her wesentlich, daß die Amylopektin-Kartoffelstärke eine solche ist, die aus durch Züchtung oder gentechnische bzw. andere molekularbiologische Verfahren hinsichtlich der Amylosebildung inhibierten Kartoffeln gewonnen wurde. Diese sogenannten Amylopektinkartoffeln liefern eine Stärke, die reines Amylopektin darstellt.

Native Stärken aus gewöhnlichen Kartoffeln oder Getreiden bestehen normalerweise aus zwei verschiedenen Glucosepolymeren, aus ca. 65 bis 85 % Amylopektin und ca. 15 bis 35 % Amylose. Amylose und Amylopektin sind keine einheitlichen Substanzen, sondern Gemische von Polymeren mit unterschiedlichen Molekulargewichten. Amylose besteht aus unverzweigten oder kaum verzweigten α-1,4-verknüpften Glucosepolymerketten, Amylopektin stellt eine hochmolekulare und hochverzweigte Polyglucosestruktur dar, die zusätzlich zu den α-1,4-Bindungen an den Verzweigungstellen 1,6-Bindungen aufweist. Die kommerziell wichtigsten Stärkesorten, wie Maisstärke, Kartoffelstärke, Weizenstärke, Tapiokastärke, Reisstärke, etc., enthalten etwa 15 bis 30 % Amylose. Wachsgetreidesorten, wie die sogenannten "waxy" Mutanten von Reis, Sorghum, Gerste und hauptsächlich Mais, liefern Stärken, die nur aus Amylopektin bestehen. Wachsmais ist bei weitem die wichtigste Getreidesorte vom Typus "waxy", die allerdings in Ländern mit rauherem oder kühlerem Klima wie Österreich, Deutschland, Belgien, den Niederlanden, Großbritannien, Polen, den Ländern Skandinaviens oder den baltischen Staaten nicht besonders gut gedeiht und deren Anbau wirtschaftlich wenig sinnvoll ist. Dagegen ist der Anbau von Kartoffeln in diesen Staaten wesentlich günstiger und zur Stärkegewinnung weit verbreitet. Es sind zwar Verfahren bekannt, um auf physikalisch-chemischem Weg den Amylosegehalt von Kartoffelstärke herabzusetzen, der Aufwand hierfür ist jedoch beträchtlich und kann nur betrieben werden, wenn wirtschaftliche Gesichtspunkte es erlauben. Vom verfahrenstechnischen Standpunkt ist es einfacher und billiger, Amylopektin aus Amylopektinkartoffeln zu gewinnen als aus herkömmlichen Kartoffeln, außerdem stellt sich die aus transgenen Kartoffeln gewonnene Amylopektin-Kartoffelstärke als einheitlicherer Werkstoff dar als das durch Fraktionierung gewöhnlicher Kartoffelstärke gewonnene Kartoffelamylopektin, wurde doch bereits ein technisch aufwendiger Verfahrensschritt durchlaufen, der eine mechanische und/oder chemische Beanspruchung der Stärke mit sich brachte. Des weiteren wurde mittlerweile auf gentechnischem Weg erreicht, daß es Kartoffelsorten gibt, die ein Amylopektin liefern, das sich in bezug auf Verzweigungsgrad, Phosphorgehalt oder Molmasse von herkömmlichem Kartoffelamylopektin unterscheidet, was wiederum Ursache für zum herkömmlichen Kartoffelamylopektin unterschiedlichen Eigenschaften ist, womit sich vollkommen neue Variationsmöglichkeiten im Einsatz von Amylopektin-Kartoffelstärken ergeben.

Überraschenderweise wurde gefunden, daß Amylopektin-Kartoffelstärke, allen anderen Amylopektinstärken überlegen ist, was deren Fähigkeit anlangt, als Schutzkolloid zur Emulsionspolymerisation eingesetzt zu werden. Im Gegensatz zu den Wachsgetreidestärken weist die Amylopektin-Kartoffelstärke einen geringeren Gehalt an Lipiden und Proteinen auf, andererseits einen höheren Gehalt an Phosphatgruppen, was dieser Stärke spezifische Polyelektrolyteigenschaften verleiht. Diverse Geruchs- und Schaumprobleme, wie sie oft beim Einsatz von Wachsgetreidestärken oder deren Derivaten vorkommen, werden beim Einsatz von Kartoffelstärke oder Amylopektin-Kartoffelstärke nicht oder nur selten und in geringerem Ausmaß beobachtet. Auf Grund ihrer hohen Reinheit bedarf Amylopektin-Kartoffelstärke keiner weiteren Reinigungsschritte, wenn sie als Schutzkolloid zur Emulsionspolymerisation eingesetzt wird. Wachsmaisstärke etwa sollte vor der Verwendung als Schutzkolloid bei der Emulsionspolymerisation durch Auswaschen entfettet und entsalzt werden, um die dem Hydrokolloid eigenen günstigen Eigenschaften voll zu entfalten. Bei der Amylopektin-Kartoffelstärke ist dieser Schritt nicht notwendig, womit sich gleichzeitig verfahrenstechnische Kosteneinsparungen ergeben.

Ein Grund, warum Stärken, modifizierte Stärken und Stärkederivate trotzdem nicht die bei der Emulsionspolymerisation am häufigsten eingesetzten Schutzkolloide darstellen, ist sicherlich darin zu suchen, daß die meisten herkömmlichen Stärken in verkleisterter Form zur Retrogradation neigen. Das heißt, daß diese Kleister im Laufe der Zeit verdicken, danach gelieren und somit unbrauchbar werden. Retrogradation wird vor allem durch die in den meisten Stärkesorten enthaltene Amylose ausgelöst, indem sich die Amylose im Laufe der Zeit in kristallinartiger Form aggregiert. Bei den Amylopektinstärken treten Retrogradationserscheinungen nicht in diesem Ausmaß auf wie bei amylosehaltigen Stärken, treten aber je nach pflanzlicher Herkunft trotzdem stärker oder schwächer zu Tage. So hat sich überraschenderweise gezeigt, daß die Amylopektin-Kartoffelstärke kaum Neigung zur Retrogradation aufweist, ja diese nahezu vernachlässigt werden kann, wohingegen Wachsmaisstärke eine deutlich höhere Retrogradationsneigung aufweist. Somit tritt während der Durchführung der Emulsionspolymerisation in Gegenwart von Stärken, modifizierten Stärken und Stärkederivaten, deren Herkunft die Amylopektinkartoffel ist, keine durch Retrogradation bedingte und damit unerwünschte Verdickung der Reaktionsmischung auf, die sonst bis zur Koagulation führen kann und die wässerige Polymerdispersion unbrauchbar macht. Im Vergleich zur Wachsmaisstärke zeichnet sich die Amylopektin-Kartoffelstärke wiederum durch ihre besonders hohe Retrogradationsstabilität und höhere Reinheit aus, wie bereits oben dargelegt wurde.

Die Amylopektin-Kartoffelstärke kann in nativer, unmodifizierter Form vorliegen, sie kann aber auch durch physikalische und/oder chemische Maßnahmen in modifizierter Form vorliegen. In Wasser lösliche oder zumindest quellbare Stärken haben sich als günstig erwiesen. Wasserlösliche bzw. in Wasser quellbare Stärken können durch Aufschluß wie Kochen in wässerigem Milieu, Druckbehandlung, Hitzebehandlung oder mechanische Beanspruchung nativer Stärken oder durch chemischen Abbau mittels Hydrolyse, insbesondere sauer katalysierter Hydrolyse, enzymatisch katalysierter Hydrolyse, oxidativer oder alkalischer Behandlung erhalten werden. Derartige Abbauprodukte werden auch als Maltodextrine, Weiß- und Gelbdextrine, Röstdextrine, British Gums, oxidierte Stärke etc. bezeichnet, allgemein auch als Stärkeabbauprodukte, Dextrine oder verzuckerte Stärken.

Erfindungsgemäß bevorzugt sind auch chemisch modifizierte bzw. derivatisierte Stärken, das sind Stärkederivate, in denen Hydroxygruppen der Glucoseeinheiten teilweise in veretherter oder veresterter Form vorliegen. Die chemische Modifizierung kann sowohl an der nativen Amylopektin-Kartoffelstärke als auch an den Abbauprodukten vorgenommen werden. Ebenso ist es auch möglich, die chemisch modifizierten Stärken im nachhinein in ihre chemisch modifizierten Abbauprodukte überzuführen.

Die Veresterung von Stärke kann sowohl mit anorganischen als auch mit organischen Säuren, deren Anhydriden oder deren Halogeniden, insbesondere mit den Chloriden, erfolgen. Übliche veresterte Stärken sind phosphatierte und/oder acetylierte Stärken oder Stärkeabbauprodukte.

Die Veretherung der Hydroxygruppen kann beispielsweise mit organischen Halogenverbindungen, Epoxiden oder Sulfaten in wässeriger alkalischer Lösung erfolgen. Beispiele für geeignete Ether sind Alkylether, Hydroxyalkylether, insbesondere Hydroxyethylether und Hydroxypropylether, weiters Carboxyalkylether, Cyanalkylether, Allylether und kationisch modifizierte Ether wie z.B. (Trisalkylammonium)alkylether und (Trisalkylammonium)-hydroxyalkylether. Je nach Art der chemischen Modifizierung können die Stärken bzw. die Stärkeabbauprodukte neutral, kationisch, anionisch, amphoter oder auch amphiphil sein.

Die Stärken bzw. Stärkeabbauprodukte können durch geeignete Derivatisierung auch hydrophobiert oder vernetzt sein. Unter hydrophobierten Stärken versteht man zumeist Stärkeether, Fettsäurestärkeester oder Stärkehalbester, deren Ether-, Ester- oder Halbestersubstituent eine gesättigte oder ungesättigte Kohlenstoffkette von zumindest vier Kohlenstoffen enthält, die verzweigt oder unverzweigt sein kann. Von besonderem Interesse sind die Halbesterderivate, die durch Reaktion von Stärke oder Stärkeabbauprodukten mit einem alk(en)ylsubstituierten cyclischen Anhydrid, wie Bernsteinsäureanhydrid, Glutarsäureanhydrid, Maleinsäureanhydrid oder Phthalsäureanhydrid, gewonnen werden, und da sind es vor allem alkenylsuccinylierte Stärken bzw. Stärkeabbauprodukte. Vemetzte Stärken werden meist durch Reaktion mit Epichlorhydrin, gemischten Anhydriden von Monocarbonsäuren mit di- oder tribasischen Säuren (z.B. gemischtes Anhydrid von Essigsäure und Adipinsäure), Natriumtrimetaphosphat, Phosphoroxychlorid oder Aldehyden gewonnen. Man bezeichnet diese Stärken dann als epivernetzte, adipatvernetzte, phosphatvernetzte oder acetalisch vernetzte Stärken. Durch die Vernetzung werden den Stärken bzw. Stärkeabbauprodukten neue, günstige Eigenschaften verliehen.

Als besonders günstig hat sich die Verwendung von chemisch nicht weiter derivatisierten Stärkeabbauprodukten der Amylopektin-Kartoffelstärke erwiesen, die durch sauer katalysierte Hydrolyse, enzymatisch katalysierte Hydrolyse, oxidative oder alkalische Behandlung erhalten wurden, also die Verwendung von Maltodextrinen, Weiß- und Gelbdextrinen, Röstdextrinen, British Gums, etc. oder von oxidierten Stärken und Stärkeabbauprodukten. Bei der Herstellung von Abbauprodukten der Amylopektin-Kartoffelstärke hat sich gezeigt, daß im Vergleich zu herkömmlichen Kartoffelstärkeabbauprodukten die Reaktionsausbeuten durchwegs höher liegen, also günstigere Herstellungskosten resultieren. Außerdem wird durch den geringeren Verlust an löslicher Stärke die Umweltbelastung herabgesetzt, indem die Kläranlagen der Produktionsstätten nicht so stark wie bisher belastet werden, was wiederum zu günstigeren Produktionskosten führt. Weiters erwies es sich auch als günstig, die entsprechenden Abbaureaktionen an der Amylopektin-Kartoffelstärke erst unmittelbar vor dem Reaktionsschritt der Emulsionspolymerisation in demselben Reaktionsgefäß durchzuführen. Diese Verfahrensvariante wird auch als "Eintopfreaktion" bezeichnet. Auf diese Weise kann man sich zusätzliche Aufarbeitungs- und Reinigungsschritte ersparen, die gesamte Reaktions- und Verfahrenszeit wird verkürzt, was wiederum zu Kosteneinsparungen führt.

Die erfindungsgemäß verwendeten Stärken, modifizierten Stärken und Stärkederivate können bei einer Emulsionspolymerisation einerseits als Schutzkolloid in Verbindung mit einem Emulgator verwendet werden, andererseits kann die Funktion des Emulgators auch von den erfindungsgemäß verwendeten Stärken, modifizierten Stärken bzw. Stärkederivaten selbst übernommen werden. Dies ist vielfach erwünscht, denn große Mengen an Emulgatoren in einem Polymerisationsgemisch ziehen häufig Probleme nach sich, wie Ausflocken, fehlende mechanische Stabilität, Koagulation oder übermäßige Schaumentwicklung. Dies hat damit zu tun, daß während der Emulsionspolymerisation aus den Monomeren nicht nur ein Polymerlatex gebildet wird, sondern daß die diversen Zusatz- und Hilfsstoffe aus der Reaktionsmischung zu einem gewissen Teil physikalisch oder chemisch in diesen Latex inkorporiert werden. Zu hohe Mengen an herkömmlichen Emulgatoren wirken sich negativ aus, wird jedoch eine Stärke, modifizierte Stärke bzw. ein Stärkederivat, die bzw. das als Schutzkolloid in einer Polymerisationsmischung fungiert, in den Polymerlatex inkorporiert, so werden im Gegensatz dazu die physikalischen Eigenschaften des Polymerlatex durch erhöhte mechanische Stabilität sogar verbessert. Die chemische Inkorporierung der als Schutzkolloid fungierenden Stärken, modifizierten Stärken bzw. Stärkederivate in den Polymerlatex wird als Pfropfung bezeichnet, und diese kann nicht vollständig unterbunden werden. Überhandnehmen der Pfropfungsreaktion bewirkt Ausflockung und Koagulation des Latex, in moderater Weise verbessert sie, wie oben bereits erwähnt, die mechanischen Eigenschaften des resultierenden Latex.

Das erfindungsgemäße Emulsionspolymerisationverfahren wird nach Art einer radikalischen Polymerisation in Gegenwart der Amylopektin-Kartoffelstärke bzw. ihrer Modifikationsprodukte oder Derivate in einem wässerigen Medium, vorzugsweise in Wasser durchgeführt. Geeignete Monomere zur Polymerisation enthalten zumindest eine ethylenisch ungesättigte Bindung wie die Vinylester und -ether, Styrole, Acrylate und Methacrylate. Im allgemeinen kann jedes ethylenisch ungesättigte Monomere, das auch cyclisch sein kann, zur radikalischen Emulsionspolymerisation herangezogen werden. Beispiele geeigneter Monomerer beinhalten Vinylester, Vinylether, Vinyl- und Vinylidenhalide, Vinylsulfonsäure, N-Vinylpyrrolidon, Ethylen, α-Olefine, vinylaromatische Monomere, Allylamine, Allylether, Allylester, Allylamide, Diene, (Meth)acrylnitril, (Meth)acrylsäure und deren Ester, Hydroxyalkyl-(meth)acrylate, (Meth)acrylamide sowie Ester und Anhydride der Croton-, Malein-, Fumar- und Itaconsäure. Geeignete Vinylester sind aliphatische Vinylester wie Vinylformiat, Vinylacetat, Vinylpropionat, Vinyl-n-butyrat, Vinylisobutyrat, Vinyl-t-butyrat, Vinylpentanoat, Vinylhexanoat, Vinyllaurat, Vinylstearat, usw. Bei den Acrylaten und Methacrylaten sind typische Vertreter Methyl(meth)acrylat, Ethyl(meth)acrylat, n-Butyl(meth)acrylat, Isobutyl-(meth)acrylat, t-Butyl(meth)acrylat, Neopentyl(meth)acrylat, n-Hexyl-(meth)acrylat, Cyclohexyl(meth)acrylat, 2-Ethylhexyl(meth)acrylat, Stearyl-(meth)acrylat, Palmityl(meth)acrylat. Typische Vinylether sind Methylvinylether, Ethylvinylether, n-Propylvinylether, iso-Propylvinylether, n-Butylvinylether, iso-Butylvinylether oder 2-Ethylhexylvinylether. Die Gruppe der α-Olefine inkludiert Propylen, 1-Buten, Isobuten, 1-Penten, Cyclopenten, 1-Hexen, Cyclohexen oder 1-Decen. Die Gruppe der vinylaromatischen Monomere enthält Styrol, α-Methylstyrol, 2-,3- oder 4-Methylstyrol, 2-, 3-, oder 4-Methoxystyrol, 1- und/oder 2-Vinylnaphthalin oder o-Chlorstyrol. Allylamin und N-substituierte Allylamine sind Beispiele für typische Allylamine, zu den typische Allylethern sind Methyl-, Ethyl-, n-Propyl-, iso-Propyl-, n-Butyl-, iso-Butyl- und 2-Ethylhexylallylether zu zählen. Von gesättigten Monocarbonsäuren abgeleitete Allylester wie Allylacetat, Allylpropionat oder Allyllactat sind ebenfalls geeignet. Geeignete Diene sind Butadien, Cyclopentadien, Dicyclopentadien, Isopren, Phenylbutadien oder Chloropren. Die Polymere können aus einem oder mehreren ethylenisch ungesättigten Monomeren hergestellt werden, die Bezeichnung "Polymer" umfaßt sowohl Homopolymere als auch Copolymere, die aus zwei oder mehreren unterschiedlichen Monomeren erhalten werden.

Eine weitere Modifizierung der Polymeren ergibt sich durch Einpolymerisieren basischer Verbindungen wie N,N'-Dialkylaminoalkyl(meth)acrylate (z.B. Dimethylaminoethylmethacrylat, Dimethylaminoethylacrylat, Diethylaminoethylacrylat), N,N'-Dialkylaminoalkyl(meth)acrylamide (z.B. Methacrylamidopropyldimethylamin) und N-Vinylimidazoliumverbindungen (z.B. N-Vinylimidazol, 2-Methyl-N-vinylimidazol, N-Vinylimidazolin, 2-Methyl-N-vinylimidazolin) in Form der freien Base, von Salzen organischer oder anorganischer Säuren oder in quartärer Form. Zur Salzbildung eignen sich Carbonsäuren mit 1 bis 7 Kohlenstoffen wie Ameisensäure, Essigsäure, Propionsäure, Benzolsulfonsäure, p-Toluolsulfonsäure, oder anorganische Säuren wie Schwefelsäure oder Halogenwasserstoffsäuren, beispielsweise Salzsäure oder Bromwasserstoffsäure. Als Quartämisierungsmittel eignen sich Alkylhalogenide wie Methylchlorid, Ethylchlorid oder Benzylchlorid und Dialkylsulfate wie Diethylsulfat und Dimethylsulfat. Weiters können die Polymere durch Einpolymerisieren vernetzender oder vernetzbarer Monomerer modifiziert werden, die zur Erhöhung der Festigkeit dienen sollen. Bei den vernetzbaren Monomeren handelt es sich um polyfunktionelle Monomere, die neben der ethylenisch ungesättigten Bindung eine Epoxy-, Hydroxy-, N-Alkylol- oder eine Carbonylgruppe enthalten. Beispiele sind die N-Hydroxyalkyl- und N-Alkylolamide der genannten, ethylenisch ungesättigten Carbonsäuren, beispielsweise 2-Hydroxyethyl[meth]acrylamid und N-Methylol(meth)acrylamid. Unter vernetzenden Verbindungen versteht man solche Verbindungen, die zwei oder mehrere nicht konjugierte, ethylenisch ungesättigte Bindungen aufweisen, wie die Vinyl- oder Allylester der ethylenisch ungesättigten Carbonsäuren, z.B. Vinyl- und Allyl(meth)acrylat, Divinylaromaten wie Divinylbenzol und Divinylnaphthalin, oder Polyvinylester oder Polyallylester von Polycarbonsäuren. Derartige Monomere werden in der Regel nur in untergeordneten Mengen bezogen auf die Gesamtmenge der zu polymerisierenden Monomeren miteinpolymerisiert.

Die Emulsionspolymerisation kann in einem Temperaturbereich von 20 °C bis 120 °C durchgeführt werden, meist zwischen 30 °C und 95 ° C, und wird durch einen geeigneten radikalischen Polymerisationsinitiator gestartet. Als radikalische Polymerisationsinitiatoren kommen all diejenigen in Betracht, die in der Lage sind, eine radikalische wässerige Emulsionspolymerisation auszulösen. Dazu gehören Peroxide, wie Wasserstoffperoxid oder Alkalimetallperoxodisulfate, wie Kalium-, Natrium- oder Ammoniumperoxodisulfat, Persäuren wie Peressigsäure, organische Peroxide wie Benzoylperoxid oder t-Butylhydroperoxid, Azoverbindungen wie Azabisisobutyronitril oder in manchen Fällen auch Perborate. Geeignet sind auch kombinierte Systeme, die aus wenigstens einem organischen Reduktionsmittel und wenigstens einem Peroxid und/oder Hydroperoxid zusammengesetzt sind, z.B. t-Butylhydroperoxid und das Natriumsalz der Hydroxymethansulfinsäure oder Wasserstoffperoxid mit Ascorbinsäure. Ferner eignen sich kombinierte Systeme, die darüber hinaus eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid t-Butylperoxid oder Alkalimetallperoxodisulfate und/oder Amanoniumperoxodisulfat verwendet werden. Bei den kombinierten Systemen ist es ferner zweckmäßig, die verzuckerten Stärken als reduzierende Komponente zu verwenden. In der Regel beträgt die Menge der eingesetzten radikalischen Initiatorsysteme, bezogen auf die Gesamtmenge der zu polymerisierenden Monomeren 0,1 bis 2 Gew.-%. Die Emulsionspolymerisation kann gegebenenfalls in Gegenwart von Polymerisationsreglem durchgeführt werden, um das Molekulargewicht der Polymerisate zu regeln. Geeignete Molekulargewichtsregler sind beispielsweise Alkohole wie Isopropanol, und schwefelhaltige Regler wie t-Butylmercaptan, Mercaptoessigsäure, Mercaptopropionsäure und Dodecylmercaptan.

Die Emulsionspolymerisation kann im Batch- oder Semi-Batch-Verfahren durchgeführt werden, aber auch in kontinuierlicher oder halb-kontinuierlicher Weise. Während der Polymerisation ist für eine gute Durchmischung der Komponenten zu sorgen. So wird das Reaktionsgemisch während der gesamten Dauer der Polymerisation und einer sich gegebenenfalls daran anschließenden Nachpolymerisation zur Erniedrigung des Restmonomerengehaltes gerührt. Die Polymerisation wird unter Ausschluß von Sauerstoff in einer Inertgasatmosphäre, z.B. unter Stickstoff, durchgeführt. Um die Polymerisation zu starten, entfernt man zunächst den Sauerstoff aus der wässerigen Lösung der Stärke, sowie aus den Monomeren und gibt zunächst einen Teil der zu polymerisierenden Monomeren zu der wässerigen Lösung der Stärke und emulgiert durch Rühren der Reaktionsmischung die Monomeren darin. Durch vorhergehende, gleichzeitige oder nachträgliche Zugabe einer wässerigen Initiatorlösung beginnt - in aller Regel nach einer kurzen Induktionsperiode - die Polymerisation. Dabei kann die zu Beginn der Polymerisation entstehende Polymerisationswärme dazu verwendet werden, um das Reaktionsgemisch zu erwärmen. Die Temperatur kann dabei bis auf 90 ° C ansteigen. Sobald die vorgelegten Monomeren polymerisiert sind, wird der Rest der Monomeren und der Initiatorlösung kontinuierlich oder portionsweise zugefügt und unter Rühren polymerisiert. Die Dosierung der Monomeren kann jedoch auch vom Start der Polymerisation an kontinuierlich vorgenommen werden. Man erhält eine feinteilige, wässerige Dispersion, bei der die Copolymerisatteilchen von einer Schutzkolloidhülle auf Basis der Amylpektinkartoffelstärke umgeben sind. Selbstverständlich kann die erfindungsgemäße radikalische wässerige Emulsionspolymerisation auch unter erhöhtem oder reduziertem Druck erfolgen. Bei den erhaltenen Dispersionen wirken sich nun weitere für die Amylopektin-Kartoffelstärke typische Eigenschaften günstig aus. Durch die, wie bereits oben erwähnt, praktisch nicht vorhandene Retrogradation werden über lange Zeit hin lagerstabile Dispersionen erhalten. Außerdem weisen Amylopektin-Kartoffelstärkederivate im allgemeinen eine wesentlich bessere emulsionsstabilisierende Wirkung auf als vergleichbare Wachsmaisstärkederivate, was zu verbesserten Viskositätsstabilitäten und verringerten, bis zu nicht vorhandenen Entmischungen oder Phasentrennungen, auch bei den hier erfindungsgemäß hergestellten Polymerisatdispersionen, führt. Das ist auch auf die einheitlichere Tröpfchen-Verteilung innerhalb der Dispersion zurückzuführen.

Die erfindungsgemäß verwendeten gegebenenfalls modifizierten bzw. derivatisierten Amylopektin-Kartoffelstärken eignen sich einerseits als alleiniges Dispergiermittel zur Durchführung der Emulsionspolymerisation, andererseits können auch weitere grenzflächenaktive Substanzen im Reaktionsgemisch anwesend sein. Als begleitende grenzflächenaktive Substanzen kommen prinzipiell die als Dispergiermittel üblicherweise eingesetzten Schutzkolloide und Emulgatoren, wie Polyvinylalkohole, Cellulose-Derivate, Vinylpyrrolidon enthaltende Copolymerisate oder synthetische und natürliche Gummi in Betracht. Auch Gemische von Emulgatoren und/oder Schutzkolloiden können verwendet werden. Als begleitende Emulgatoren können sowohl anionische, kationische als auch nicht-ionische verwendet werden. Im Falle der Verwendung von Gemischen grenzflächenaktiver Substanzen müssen die Einzelkomponenten miteinander verträglich sein, was im Zweifelsfall an Hand weniger Vorversuche überprüft werden kann. Brauchbare nicht-ionische Emulgatoren sind z.B. ethoxylierte Fettalkohole (EO-Grad: 3 bis 50, Alkylrest: C₈ bis C₃₆), ethoxylierte Mono-, Di- und Trialkylphenole (EO-Grad: 3 bis 50, Alkylrest: C₄ bis C₁₀) sowie Polyethylenoxid/Polypropylenoxid-Blockcopolymere. Geeignete anionische Emulgatoren umfassen Alkalimetallsalze von Dialkylestem der Sulfobemsteinsäure, sowie Alkali- und Ammoniumsalze von Alkylsulfaten (Alkylrest: C₈ bis C₂₂), von Schwefelsäurehalbestern ethoxylierter Alkanole (EO-Grad: 2 bis 50, Alkylrest: C₁₂ bis C₁₈) und ethoxylierter Alkylphenole (EO-Grad: 3 bis 50, Alkylrest: C₄ bis C₉), von Alkylsulfonsäuren (Alkylrest: C₁₂ bis C₁₈) und von Alkylarylsulfonsäuren (Alkylrest: C₉ bis C₁₈). Als kationische Emulgatoren sind vorzugsweise quartäre Ammoniumhalogenide wie z.B. Trimethylcetylammoniumchlorid, Methyltrioctylammoniumchlorid, Benzyltriethylammoniumchlorid oder quartäre Verbindungen von N-C₆ bis C₂₀-Alkylpyridinen, -morpholinen oder - imidazolen wie N-Laurylpyridiniumchlorid einsetzbar. Wie bereits erwähnt, lassen sich die Emulsionspolymerisationen auch ohne die hier aufgeführten Emulgatoren oder Schutzkolloide durchführen, wenn man die erfindungsgemäßen Stärken, modifizierten Stärken und Stärkederivate verwendet, insbesondere wenn man kationische, anionische, amphotere oder auch amphiphile Stärken oder Stärkeabbauprodukte verwendet, die gleichzeitig auch die Aufgaben eines Emulgators oder Schutzkolloids erfüllen.

Die erfindungsgemäß erhaltenen Polymerdispersionen eignen sich zum Einsatz in der Papier-, Klebstoff-, Farben-, Textil- und Baustoffindustrie. Zu ihren vielseitigen Verwendungsmöglichkeiten zählen Applikationen als Klebstoffe, als Bindemittel für Teppichrückenbeschichtungen und Papierstreichmassen, als Zusatz zu mineralischen, z.B. hydraulisch abbindenden, Massen, als Schlichtemittel für Fasern, als Bindemittel für feinteilige mineralische und/oder organische Materialien zur Herstellung von Formkörpern, insbesondere für den Metallguß, oder Anstrichfarben, ebenso als Bindemittel oder Verdicker für die Herstellung von Schleifmitteln auf der Basis untereinander und/oder auf einem Träger gebundener feinteiliger Schleifpartikel. Ebenso eignen sich diese Polymerdispersionen aufgrund ihrer verbesserten mechanischen Stabilität zur Herstellung von Überzügen, insbesondere zur Umhüllung und/oder Einbettung von oral applizierbaren pharmazeutischen Wirkstoffen.

Es ist auch möglich, die erhaltenen Polymerdispersionen im allgemeinen ohne zusätzliche Hilfsmittel durch Sprühtrocknung oder Walzentrocknung in redispergierbare Polymerisatpulver überzuführen, deren Redispergierbarkeit auch nach längerer Lagerdauer erhalten bleibt.

### Beispiel

215 g oxidativ abgebaute Amylopektin-Kartoffelstärke werden in 500 g Wasser vorgelegt, unter Stickstoffatmosphäre auf 85 ° C erwärmt und mit α-Amylase (0.07 %ig bezogen auf Stärke Trockensubstanz) versetzt. Unter ständigem Rühren wird die Temperatur bis zur Siedehitze erhöht und die Stärke wird 10 min enzymatisch abgebaut. Die Inaktivierung des Enzyms erfolgt durch Zugabe von Eisessig, danach wird auf 85°C abgekühlt und es werden 7 g einer 1 %igen Eisen-II-sulfat-Lösung sowie 0.7 g 30%iges Wasserstoffperoxid zugefügt. Innerhalb von 2,5 h wird eine Monomerenmischung von 312 g n-Butylacrylat, 281 g Styrol und 31.2 g Methacrylsäure, mittels 0.6 g Na-Dodecylsulfonat in 255 g Wasser voremulgiert, kontinuierlich zudosiert, gleichzeitig erfolgt ebenfalls eine kontinuierliche Zuführung einer Initiatorlösung von 4 g 30%igem Wasserstoffperoxid in 50 ml Wasser, deren Zulauf insgesamt 3 h in Anspruch nimmt. Dann wird eine Stunde bei 85°C nachpolymerisiert und auf Raumtemperatur abgekühlt. Es resultiert eine gut rührbare, lagerstabile Polymerdispersion mit einem Feststoffgehalt von ca. 50 %.

## Patentansprüche

1. Emulsions(co)polymerisationsverfahren, bei welchen Stärke in vorzugsweise modifizierter und/oder derivatisierter Form, gegebenenfalls gemeinsam mit anderen an sich für diesen Zweck bekannten Emulgatoren oder Hilfsmitteln zur Stabilisierung der Emulsion verwendet wird, **dadurch gekennzeichnet, daß** als Stärke eine Amylopektin-Kartoffelstärke eingesetzt wird, die aus durch Züchtung oder gentechnische bzw. andere molekularbiologische Verfahren hinsichtlich der Amylosebildung inhibierten Kartoffeln gewonnen wurde.

2. Emuisions(co)polymerisationsverfahren nach Anspruch 1, **dadurch gekennzeichnet, daß** die Amylopektin-Kartoffelstärke aus durch anti-sense-Inhibition eines GBSS-Gens hinsichtlich der Amylosebildung inhibierten Kartoffeln gewonnen wurde.

3. Emulsions(co)polymerisationsverfahren nach Anspruch 1, **dadurch gekennzeichnet, daß** die Amylopektin-Kartoffelstärke aus durch Cosuppression hinsichtlich der Amylosebildung inhibierten Kartoffeln gewonnen wurde.

4. Emulsions(co)polymerisationsverfahren nach einem der Ansprüche 1 bis 3, **dadurch gekennzeichnet, daß** die Amylopektin-Kartoffelstärke eine Amylosegehalt unter 5 %, vorzugsweise unter 2 % hat.

5. Emulsions(co)polymerisationsverfahren nach einem der Ansprüche 1 bis 4, **dadurch gekennzeichnet, daß** die Amylopektin-Kartoffelstärke in durch physikalische und/oder chemische und/oder enzymatische Verfahren abgebauter Form eingesetzt wird.

6. Emulsions(co)polymerisationsverfahren nach Anspruch 5, **dadurch gekennzeichnet, daß** die Amylopektin-Kartoffelstärke in durch saure Katalyse, enzymatische Katalyse, oxidative oder alkalische Behandlung abgebauter Form eingesetzt wird.

7. Emulsions(co)polymerisationsverfahren nach einem der Ansprüche 1 bis 5, **dadurch gekennzeichnet, daß** die Amylopektin-Kartoffelstärke in chemisch derivatisierter Form eingesetzt wird.

8. Emulsions(co)polymerisationsverfahren nach einem der Ansprüche 1 bis 7, **dadurch gekennzeichnet, daß** die Amylopektin-Kartoffelstärke in abgebauter und chemisch derivatisierter Form eingesetzt wird.

9. Emulsions(co)polymerisationsverfahren nach Anspruch 7 oder 8, **dadurch gekennzeichnet, daß** die Amylopektin-Kartoffelstärke in veresterter und/oder veretherter, gegebenenfalls vernetzter Form eingesetzt wird.

10. Emulsions(co)polymerisationsverfahren nach einem der Ansprüche 1 bis 9, **dadurch gekennzeichnet, daß** die Amylopektin-Kartoffelstärke in kationischer, anionischer, amphoterer oder amphiphiler Form eingesetzt wird.

11. Emulsions(co)polymerisationsverfahren nach einem der Ansprüche 7 bis 10, **dadurch gekennzeichnet, daß** die Amylopektin-Kartoffelstärke in Form eines Esters mit einer anorganischen oder organischen Säure eingesetzt wird.

12. Emulsions(co)polymerisationsverfahren nach Anspruch 11, **dadurch gekennzeichnet, daß** die Amylopektin-Kartoffelstärke in phosphatierter und/oder acetylierter Form eingesetzt wird.

13. Emulsions(co)polymerisationsverfahren nach einem der Ansprüche 7 bis 10, **dadurch gekennzeichnet, daß** die Amylopektin-Kartoffelstärke als Alkylether, Hydroxyalkylether, vorzugsweise Hydroxyethylether oder Hydroxypropylether, als Carboxyalkylether, Cyanalkylether, Allylether oder als (Trisalkylammonium)alkylether oder (Trisalkylammonium)-hydroxyalkylether eingesetzt wird.

14. Emulsions(co)polymerisationsverfahren nach einem der Ansprüche 7 bis 13, **dadurch gekennzeichnet, daß** die Amylopektin-Kartoffelstärke in hydrophobierter Form als Stärkeether, Fettsäurestärkeester oder Stärkehalbester, deren Ether-, Ester- oder Halbestersubstituent eine gesättigte oder ungesättigte, verzweigte oder gerade Kohlenstoffkette von zumindest vier Kohlenstoffen enthält, eingesetzt wird.

15. Emulsions(co)polymerisationsverfahren nach Anspruch 14, **dadurch gekennzeichnet, daß** die Amylopektin-Kartoffelstärke als Halbester, der durch Reaktion von Stärke oder Stärkeabbauprodukten mit einem alk(en)ylsubstituierten cyclischen Anhydrid, wie Bernsteinsäureanhydrid, Glutarsäureanhydrid, Maleinsäureanhydrid oder Phthalsäureanhydrid, gewonnen wurde, eingesetzt wird.

16. Verfahren nach einem der Ansprüche 1 bis 7, **dadurch gekennzeichnet, daß** die Abbaureaktionen der Amylopektin-Kartoffelstärke unmittelbar vor dem Reaktionsschritt der Emulsionspolymerisation in demselben Reaktionsgefäß als sog. "Eintopfreaktion" vorgenommen werden.

17. Wässerige Polymerdispersionen, die Stärke in vorzugsweise modifizierter bzw. derivatisierter Form, gegebenenfalls gemeinsam mit anderen an sich bekannten Zusatzstoffen oder Hilfsmitteln enthalten, **dadurch gekennzeichnet, daß** die Stärke eine Amylopektin-Kartoffelstärke ist, die aus durch Züchtung oder gentechnische bzw. andere molekularbiologische Verfahren hinsichtlich der Amylosebildung inhibierten Kartoffeln gewonnen wurde.

18. Wässerige Polymerdispersionen nach Anspruch 17, hergestellt gemäß einem der Ansprüche 1 bis 16.

## Claims

1. An emulsion (co)polymerization method, in which a starch in a preferably modified and/or derivatized form is used to stabilize said emulsion, optionally along with other emulsifiers or auxiliary agents known per se as for this purpose, **characterised in that** as said starch an amylopectin potato starch is used which has been obtained from potatoes inhibited in terms of amylose formation by cultivation or by genetical engineering or other molecular-biological methods, respectively.

2. An emulsion (co)polymerization method according to claim 1, **characterised in that** the amylopectin potato starch has been obtained from potatoes inhibited in terms of amylose formation by anti-sense inhibition of a GBSS gene.

3. An emulsion (co)polymerization method according to claim 1, **characterised in that** the amylopectin potato starch has been obtained from potatoes inhibited in terms of amylose formation by co-suppression.

4. An emulsion (co)polymerization method according to any one of claims 1 to 3, **characterised in that** the amylopectin potato starch has an amylose content of below 5%, preferably of below 2%.

5. An emulsion (co)polymerization method according to any one of claims 1 to 4, **characterised in that** the amylopectin potato starch is used in a form degraded by physical and/or chemical and/or enzymatic methods.

6. An emulsion (co)polymerization method according to claim 5, **characterised in that** the amylopectin potato starch is used in a form degraded by acidic catalysis, enzymatic catalysis, oxidative treatment or alkaline treatment.

7. An emulsion (co)polymerization method according to any one of claims 1 to 5, **characterised in that** the amylopectin potato starch is used in a chemically derivatized form.

8. An emulsion (co)polymerization method according to any one of claims 1 to 7, **characterised in that** the amylopectin potato starch is used in a degraded and chemically derivatized form.

9. An emulsion (co)polymerization method according to claim 7 or 8, **characterised in that** the amylopectin potato starch is used in an esterified and/or etherified form, optionally in a crosslinked form.

10. An emulsion (co)polymerization method according to any one of claims 1 to 9, **characterised in that** the amylopectin potato starch is used in cationic, anionic, amphoteric or amphiphilic form.

11. An emulsion (co)polymerization method according to any one of claims 7 to 10, **characterised in that** the amylopectin potato starch is used in the form of an ester with an inorganic or organic acid.

12. An emulsion (co)polymerization method according to claim 11, **characterised in that** the amylopectin potato starch is used in phosphated and/or acetylated form.

13. An emulsion (co)polymerization method according to any one of claims 7 to 10, **characterised in that** the amylopectin potato starch is used as an alkyl ether, hydroxyalkyl ether, preferably hydroxyethyl ether or hydroxypropyl ether, as a carboxyalkyl ether, cyanoalkyl ether, allyl ether, or as a (trisalkylammonium)alkyl ether or (trisalkylammonium)hydroxylalkyl ether.

14. An emulsion (co)polymerization method according to any one of claims 7 to 13, **characterised in that** the amylopectin potato starch is used in a hydrophobed form as a starch ether, fatty acid starch ester or starch semi-ester, the ether, ester or semi-ester substituent of which contains a saturated or unsaturated branched or straight carbon chain of at least four carbons.

15. An emulsion (co)polymerization method according to claim 14, **characterised in that** the amylopectin potato starch is used as a semi-ester obtained by reacting starch or starch degradation products with an alk(ene)yl-substituted cyclic anhydride, such as succinic acid anhydride, glutaric acid anhydride, maleic acid anhydride or phthalic acid anhydride.

16. A method according to any one of claims 1 to 7, **characterised in that** the degradation reactions of the amylopectin potato starch are effected immediately prior to the reaction step of the emulsion polymeirisation in the same reaction vessel as so-called "one-pot" reaction.

17. Aqueous polymer dispersions comprising starch in a preferably modified or derivatized form, respectively, optionally along with other additives or auxiliary agents known per se, **characterised in that** the starch is an amylopectin potato starch obtained from potatoes inhibited in terms of amylose formation by cultivation, or by genetical engineering or other molecular-biological methods.

18. Aqueous polymer dispersions according to claim 17, prepared according to any one of claims 1 to 16.

## Revendications

1. Procédé de (co)polymérisation en émulsion dans lequel on utilise de l'amidon dans une forme de préférence modifiée et/ou dérivée, éventuellement en association avec d'autres émulsionnants ou auxiliaires connus pour ces fins, destinés à la stabilisation de l'émulsion, **caractérisé en ce que** l'on utilise comme amidon un amylopectine-amidon de pomme de terre, lequel a été produit par culture ou par un procédé génétique respectivement un autre procédé moléculaire biologique concernant la formation d'amylose de pommes de terre inhibées.

2. Procédé de (co)polymérisation en émulsion selon la revendication 1, **caractérisé en ce que** l'amylopectine-amidon de pomme de terre a été produit par une inhibition anti-sens d'un gène GBSS concernant la formation d'amylose à partir de pommes de terre inhibées.

3. Procédé de (co)polymérisation en émulsion selon la revendication 1, **caractérisé en ce que** l'amylopectine-amidon de pomme de terre a été produit par co-suppression concernant la formation d'amylose à partir de pommes de terre inhibées.

4. Procédé de (co)polymérisation en émulsion selon l'une quelconque des revendications 1 à 3, **caractérisé en ce que** l'amylopectine-amidon de pomme de terre présente une teneur en amylose inférieure à 5 %, de préférence inférieure à 2 %.

5. Procédé de (co)polymérisation en émulsion selon l'une quelconque des revendications 1 à 4, **caractérisé en ce que** l'amylopectine-amidon de pomme de terre est utilisé dans une forme décomposée par un procédé physique et/ou chimique et/ou enzymatique.

6. Procédé de (co)polymérisation en émulsion selon la revendication 5, **caractérisé en ce que** l'on utilise l'amylopectine-amidon de pomme de terre dans une forme décomposée par catalyse acide, catalyse enzymatique, traitement oxydant ou alcalin.

7. Procédé de (co)polymérisation en émulsion selon l'une quelconque des revendications 1 à 5, **caractérisé en ce que** l'on utilise l'amylopectine-amidon de pomme de terre dans une forme chimiquement dérivée.

8. Procédé de (co)polymérisation en émulsion selon l'une quelconque des revendications 1 à 7, **caractérisé en ce que** l'on utilise l'amylopectine-amidon de pomme de terre dans une forme décomposée et chimiquement dérivée.

9. Procédé de (co)polymérisation en émulsion selon la revendication 7 ou 8, **caractérisé en ce que** l'on utilise l'amylopectine-amidon de pomme de terre dans une forme estérifiée et/ou éthérifiée, éventuellement réticulée.

10. Procédé de (co)polymérisation en émulsion selon l'une quelconque des revendications 1 à 9, **caractérisé en ce que** l'on utilise l'amylopectine-amidon de pomme de terre dans une forme cationique, anionique, amphotère ou amphiphile.

11. Procédé de (co)polymérisation en émulsion selon l'une quelconque des revendications 7 à 10, **caractérisé en ce que** l'on utilise l'amylopectine-amidon de pomme de terre dans la forme d'un ester avec un acide inorganique ou organique.

12. Procédé de (co)polymérisation en émulsion selon la revendication 11, **caractérisé en ce que** l'on utilise l'amylopectine-amidon de pomme de terre dans une forme phosphatée et/ou acétylée.

13. Procédé de (co)polymérisation en émulsion selon l'une quelconque des revendications 7 à 10, **caractérisé en ce que** l'on utilise l'amylopectine-amidon de pomme de terre comme alkyléther, hydroxyalkyléther, de préférence hydroxyéthyléther ou hydroxypropyléther, comme carboxyalkyléther, cyanoalkyléther, allyléther ou comme (trisalkylammonium)alkyléther ou (trisalkylammonium)hydroxyalkyléther.

14. Procédé de (co)polymérisation en émulsion selon l'une quelconque des revendications 7 à 13, **caractérisé en ce que** l'on utilise l'amylopectine-amidon de pomme de terre dans une forme rendue hydrophobe comme éther d'amidon, ester d'amidon d'acide gras ou semi-ester d'amidon, dont le substituant éther, ester ou semi-ester contient une chaîne hydrocarbonée saturée ou insaturée, ramifiée ou linéaire d'au moins quatre atomes de carbone.

15. Procédé de (co)polymérisation en émulsion selon la revendication 14, **caractérisé en ce que** l'on utilise l'amylopectine-amidon de pomme de terre comme semi-ester, lequel a été produit par réaction d'amidon ou de produits de décomposition d'amidon avec un anhydride cyclique alc(én)yle-substitué, comme l'anhydride d'acide succinique, l'anhydride d'acide glutarique, l'anhydride d'acide maléique ou l'anhydride d'acide phtalique.

16. Procédé selon l'une quelconque des revendications 1 à 7, **caractérisé en ce que** les réactions de décomposition de l'amylopectine-amidon de pomme de terre sont réalisées immédiatement avant l'étape de réaction de la polymérisation en émulsion dans la même cuve de réaction comme une "réaction en une cuve" ainsi appelée.

17. Dispersions polymère aqueuses, lesquelles contiennent de l'amidon dans une forme de préférence modifiée respectivement dérivée, éventuellement en association avec d'autres additifs ou auxiliaires connus, **caractérisées en ce que** l'amidon est un amylopectine-amidon de pomme de terre, lequel a été produit par culture ou par un procédé génétique respectivement un autre procédé moléculaire biologique concernant la formation d'amylose à partir de pommes de terre inhibées.

18. Dispersions polymères aqueuses selon la revendication 17 préparées selon l'une quelconque des revendications 1 à 16.
